# FASCICULE DE BREVET EUROPEEN

(11) **EP 4 422 904 B1**
(45) Date de publication et mention de la délivrance du brevet: **06.08.2025**
(21) Numéro de dépôt: 22793190.4
(22) Date de dépôt: 22.09.2022
(51) Int. Cl.: B60K 35/10, B60K 35/60, B60K 35/81

(54) **PROCÉDÉ DE COMMANDE MIS EN OEUVRE DANS UN VÉHICULE ET VÉHICULE ASSOCIÉ**
IN EINEM FAHRZEUG IMPLEMENTIERTES STEUERUNGSVERFAHREN UND ZUGEHÖRIGES FAHRZEUG
CONTROL METHOD IMPLEMENTED IN A VEHICLE, AND ASSOCIATED VEHICLE

(30) Priorité: 27.10.2021 FR 2111399
(43) Date de publication de la demande: 04.09.2024
(73) Titulaire: Stellantis Auto SAS, 78300 Poissy (FR)
(72) Inventeur: OJEDA, Luciano, 75005 PARIS (FR)
(74) Mandataire: ESIP
(86) Numéro de dépôt international: PCT/FR2022/051787
(87) Numéro de publication internationale: WO 2023/073293

(56) Documents cités:
- EP-A1- 3 478 557
- FR-A1- 3 086 902
- US-A1- 2020 026 413

## Description

On connait du document FR3086902 A1 un procédé permettant de régler automatiquement les rétroviseurs d'un véhicule à l'aide d'une caméra intérieure et d'une unité centrale.

On connait du document US2020/026413 A1 un processeur et une mémoire pour afficher un curseur dans une scène de réalité augmentée, positionné selon des données de gestes. Le système ajuste les interactions selon les objets sélectionnés, et les gestes de l'utilisateur déterminent le comportement du curseur ainsi que les opérations associées aux objets.

On connait du document EP3478557 A1 un procédé de surveillance d'un conducteur. Actuellement, l'augmentation du nombre d'éléments électriques dans un véhicule peut engendrer plusieurs difficultés, notamment :
- Un problème d'encombrement du tableau de bord par des boutons ou plus généralement l'interface homme-machine,
- Un problème de complexité de l'accès à la fonction (un enchaînement de plusieurs sous menus peut être nécessaire sur un écran tactile, par exemple),
- Un problème d'éloignement de l'interface homme-machine avec les zones de préhension du conducteur du véhicule.

Pour remédier à cet inconvénient, l'invention concerne un procédé de commande mis en œuvre dans un véhicule automobile, le véhicule comprenant :
- Dans son habitacle, une interface homme-machine, l'interface homme-machine comprenant :
   - Un premier module à commandes, et
   - Un module d'analyse d'un regard (d'un conducteur du véhicule),
- Une pluralité d'éléments électriques extérieurs à l'interface homme-machine (autrement dit, la pluralité d'éléments électriques, et le premier élément électrique et le deuxième élément électrique mentionnés plus loin ne font pas partie de (ou ne sont pas dans) l'interface homme-machine), et
- Une pluralité de zones (situées dans l'habitacle ou sur une surface extérieure du véhicule visible depuis l'habitacle) extérieures à l'interface homme-machine (autrement dit la pluralité de zones et la première et la deuxième zone susmentionnée ne font pas partie de (ou ne sont pas dans) l'interface homme-machine),
- Chaque élément de la pluralité d'éléments électriques étant associés à une zone de la pluralité de zones du véhicule,

Caractérisé en ce qu'il comprend les étapes suivantes :
- Premier déclenchement d'une première commande générique, par l'intermédiaire du premier module, à un premier instant,
- Détection, par le module d'analyse du regard, à un deuxième instant, d'un regard (R) (par le conducteur) vers une première zone de la pluralité de zones associée à un premier élément électrique de la pluralité d'éléments électriques ou vers une deuxième zone de la pluralité de zones associée à un deuxième élément électrique de la pluralité d'éléments électrique, et
- Si le deuxième instant est séparé du premier instant d'une durée inférieure à un premier seuil prédéterminé, et :
   - Si, à l'étape de détection, il a été détecté que le regard (par le conducteur) portait vers la première zone, (alors) transmission de la première commande au premier élément électrique, ou
   - Si, à l'étape de détection, il a été déterminé que le regard (par le conducteur) portait vers la deuxième zone, (alors) transmission de la première commande au deuxième élément électrique.

La commande de l'élément électrique s'en trouve donc simplifiée puisqu'elle peut être activée par une commande générique commune à la pluralité d'éléments électriques, et un regard vers la zone associée à l'élément électrique.

Préférentiellement, la pluralité d'éléments électriques comporte plus de deux éléments (par exemple trois) et la pluralité de zones comporte plus de deux zones (par exemple trois). Les autres éléments de la pluralité d'éléments que le premier et le deuxième éléments peuvent remplacer le premier et/ou le deuxième éléments dans le procédé selon l'invention, et les autres zones de la pluralité de zones que la première et le deuxième zones peuvent remplacer la première et/ou le deuxième zone dans le procédé selon l'invention.

Préférentiellement, l'association de chaque élément de la pluralité d'éléments électriques à une zone de la pluralité de zones du véhicule est mémorisée en mémoire de l'interface homme-machine (par exemple sous la forme d'une table). En, variante, cette association peut être mémorisée ailleurs dans le véhicule.

Préférentiellement, si le module d'analyse du regard détecte que le conducteur ne regarde ni la première zone ni la deuxième zone, alors aucune commande n'est transmise ni au premier élément électrique ni au deuxième élément électrique. Plus généralement, préférentiellement, si le module d'analyse détecte que le conducteur ne regarde aucune des zones de la pluralité de zones, aucune commande n'est transmise à un élément de la pluralité d'éléments.

Le premier seuil prédéterminé peut éventuellement être nulle, ce qui signifie que les étapes de détection et de premier déclenchement sont simultanées. En variante, le seuil est par exemple compris entre 100 millisecondes et 1 secondes.

Selon une mode de réalisation, le premier module est à commandes tactiles et le premier déclenchement est réalisé par (la détection d') un touché (du conducteur) sur le premier module.

En variante, le premier module est à commandes gestuelles et le premier déclenchement est réalisé par (la détection d') un geste (du conducteur), ou le premier module est à commandes vocales et le premier déclenchement est réalisé par la voix (du conducteur).

Selon un exemple de réalisation, le premier module comprend un écran tactile et le premier déclenchement d'une première commande générique est réalisé par (la détection d') un touché (du conducteur) sur l'écran tactile. En variante, le premier module comprend des boutons tactiles.

Selon un exemple de réalisation, la première zone est une cave à pieds comprise dans l'habitacle, et le premier élément électrique est une lampe d'éclairage de la cave à pieds.

En variante le première ou deuxième zone est une partie du plafond de l'habitacle comprenant un éclairage de plafonnier et le premier et/ou le deuxième élément électrique est une lampe d'éclairage de plafonnier.

Dans le cas où le premier élément ou le deuxième élément est une lampe, la première commande ou la deuxième commande peut commander l'allumage (ou l'extinction) de la lampe.

La première zone est par exemple une surface extérieure du premier élément et/ou la deuxième zone est une surface extérieure du deuxième élément. En variante, la première zone s'étend au-delà de la surface du premier élément.

Selon un mode de réalisation, le premier élément est un premier rétroviseur latéral (1100) du véhicule, et(/ou) le deuxième élément est un deuxième rétroviseur latéral du véhicule (différent du premier rétroviseur latéral. Le deuxième rétroviseur peut être un rétroviseur opposé au premier rétroviseur par rapport à l'habitacle).

Dans le cas où le premier élément et/ou le deuxième élément est un rétroviseur latéral, la première commande ou la deuxième commande peut commander un réglage d'une position du miroir du ou des rétroviseurs.

Selon un mode de réalisation, le procédé comporte en outre une étape de traduction de la commande préalablement à sa transmission :
- En une deuxième commande dédiée, si, à l'étape de détection, il a été détecté que le regard (du conducteur) portait vers la première zone,
- En une troisième commande dédiée différente de la deuxième commande dédiée, si, à l'étape de détection, il a été déterminé que le regards (du conducteur) portait vers la deuxième zone.

En variante, aucune traduction n'est réalisée. Seul un identifiant de l'élément électrique est éventuellement ajouté ou modifié dans la première commande.

Selon un mode de réalisation, le deuxième instant précède le premier instant. En variante, le premier instant précède le deuxième instant.

Préférentiellement, la transmission de la première commande au premier élément électrique ou de la deuxième commande au deuxième élément électrique est conditionnée à une coïncidence du premier instant avec le deuxième instant, ce qui permet d'identifier sans ambiguïté que l'élément regardé est celui visé par le conducteur. Selon un mode de réalisation, la transmission de la commande (première ou deuxième respectivement) est conditionnée par la détection que le regard en direction de la zone (première ou deuxième respectivement) a débuté en outre avant le premier instant.

L'invention concerne aussi un programme d'ordinateur comprenant des instructions, exécutables par un microprocesseur ou un microcontrôleur, pour la mise en œuvre du procédé selon l'invention.

Enfin, l'invention concerne configuré pour réaliser les étapes du procédé de commande selon l'invention, autrement dit, un véhicule automobile comprenant :
- Dans son habitacle, une interface homme-machine, l'interface homme-machine comprenant :
   - Un premier module à commandes, et
   - Un module d'analyse d'un regard (d'un conducteur du véhicule),
- Une pluralité d'éléments électriques extérieurs à l'interface homme-machine (autrement dit, la pluralité d'éléments électriques, et/ou le premier élément électrique et le deuxième élément électrique introduits plus loin ne font pas partie de (ou ne sont pas dans) l'interface homme-machine), et
- Une pluralité de zones (situées dans l'habitacle ou sur une surface extérieure du véhicule visible depuis l'habitacle) extérieurs à l'interface homme-machine (autrement dit la pluralité de zones et la première et la deuxième zone mentionnée ci-dessous ne font pas partie de (ou ne sont pas dans) l'interface homme-machine),
- Chaque élément de la pluralité d'éléments électriques étant associés à une zone de la pluralité de zones du véhicule,

Le véhicule étant caractérisé en ce qu'il est configuré pour réaliser les étapes suivantes :
- Un premier déclenchement (suite à une action d'un conducteur) d'une première commande générique, par l'intermédiaire du premier module, à un premier instant,
- Détection, par le module d'analyse du regard, à un deuxième instant, d'un regard (par le conducteur) vers une première zone associée à un premier élément électrique de la pluralité d'élément électriques ou vers une deuxième zone de la pluralité de zones associée à un deuxième élément électrique de la pluralité d'élément électriques,
- Si le deuxième instant est séparé du premier instant d'une durée inférieure à un premier seuil prédéterminé, et :
   - Si, à l'étape de détection, il a été détecté que le regard (par le conducteur) portait vers la première zone, (alors) transmission de la première commande au premier élément électrique ,ou
   - Si, à l'étape de détection, il a été déterminé que le regard (par le conducteur) portait vers la deuxième zone, (alors) transmission de la première commande au deuxième élément électrique.

Les caractéristiques et les avantages du véhicule et du programme d'ordinateur sont similaires au procédé, c'est pourquoi ils ne sont pas répétés ici.

On entend que le véhicule un autre élément est « configuré pour » réaliser ou mettre en œuvre une étape ou une opération, par le fait que l'élément comporte des moyens pour (autrement dit « est conformé pour » ou « est adapté pour ») réaliser ou mettre en œuvre l'étape ou l'opération. Il s'agit préférentiellement de moyens électroniques, par exemple un programme d'ordinateur, un ordinateur, des moyens d'acquisition électronique (caméra, microphone, capteur, ...), des données en mémoire et/ou des circuits électroniques spécialisés.

D'autres caractéristiques et avantages de la présente invention apparaitront plus clairement à la lecture de la description détaillée qui suit comprenant des modes de réalisation de l'invention donnés à titre d'exemples nullement limitatifs et illustrés par les dessins annexés, dans lesquels :
[Fig. 1] représente un véhicule selon un mode de réalisation de l'invention.
[Fig. 2] représente le procédé de l'invention, selon un exemple de réalisation, pour le véhicule de la figure 1.

### Description détaillée d'un exemple de réalisation de l'invention

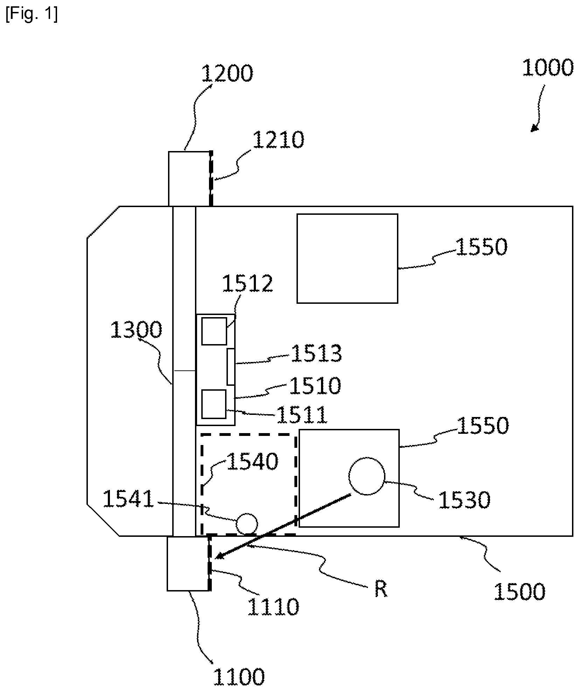

Figure 1, le véhicule automobile 1000 comprend, dans son habitacle 1500, une interface homme-machine 1510, l'interface homme-machine 1510 comprenant :
- Un premier module à commandes 1513,
- Un module d'analyse d'un regard 1511 (d'un conducteur 1530 du véhicule 1000).

Le véhicule automobile 1000 comprend également :
- Une pluralité d'éléments électriques 1100, 1200 et 1541 extérieurs à l'interface homme-machine 1510,
- Une pluralité de zones 1210, 1110, 1540 situées dans l'habitacle 1500 ou sur une surface extérieure du véhicule 1000 (visible depuis l'habitacle 1500), et extérieurs à l'interface homme-machine 1510 (autrement dit la pluralité de zones 1110, 1210, 1540 ne fait pas partie de (ou ne sont pas dans) l'interface homme-machine 1510),

Chaque élément de la pluralité d'éléments électriques 1100, 1200, 1541 est associé à une zone de la pluralité de zones 1210, 1110, 1540 du véhicule 1000. Préférentiellement, cette association est mémorisée en mémoire 1512 de l'interface homme-machine 1510 (par exemple sous la forme d'une table).

Le premier module 1513 est préférentiellement un écran tactile.

L'habitacle 1500 comprends également deux sièges 1550.

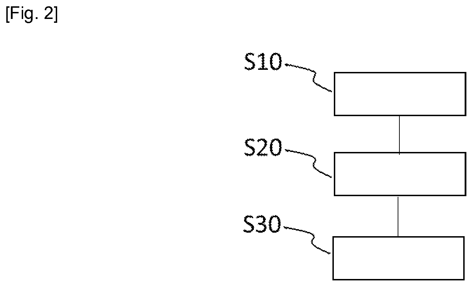

Figure 2, à l'étape S10, le module d'analyse du regard 1511 détecte un regard R par le conducteur 1530 vers une première zone 1110 associée à un premier élément électrique 1100.

Le premier élément 1100 est par exemple un premier rétroviseur latéral 1100 du véhicule 1000 et la première zone est la surface extérieure 1110 du premier rétroviseur latéral 1100.

En variante, la première zone est la cave à pieds 1540 comprise dans l'habitacle 1500, et le premier élément électrique est une lampe d'éclairage 1541 de la cave à pieds 1540.

A l'étape S20, simultanément à l'étape S10, le conducteur 1530 (seule la tête 1530 du conducteur a été dessinée et représente le conducteur 1530) touche l'écran tactile 1513, ce qui déclenche la première commande générique.

Les étapes S10 et S20 peuvent aussi être séparées par une durée par exemple comprise entre 100 millisecondes et 1 secondes.

A l'étape S30, l'interface interface homme-machine 1510 transmet la première commande au premier élément électrique 1100 ou 1541.

Dans le cas où le premier élément ou le deuxième élément est un rétroviseur latéral, la première commande peut commander le réglage de la position du miroir du ou des rétroviseurs.

Dans le cas où le premier élément ou le deuxième élément est une lampe, la première commande ou la deuxième commande peut commander l'allumage (ou l'extinction) de la lampe.

Selon un mode de réalisation, la transmission de la commande (première ou deuxième respectivement) à l'étape S30 est conditionnée par la détection que le regard R en direction de la zone (première zone 1110/1540 ou deuxième zone 1210) à l'étape S10 a débuté en outre avant que le conducteur le touche l'écran tactile 1513 à l'étape S20.

La commande peut être traduite, préalablement à sa transmission, de manière à être adaptée au premier élément électrique 1100 ou 1541.

Selon un exemple de réalisation, le procédé se poursuit par les mêmes étapes que les étapes S10 à S30, mais avec un deuxième élément électrique différent du premier élément électrique à la place du premier élément. Le deuxième élément électrique peut être le rétroviseur latéral 1200, et la deuxième zone, la surface 1210 du rétroviseur latéral 1200. Notamment, si le deuxième élément électrique est de nature différente que le premier élément électrique, la commande dédiée peut être différente qu'à l'étape S30.

Préférentiellement, si le module d'analyse du regard 1511 détecte que le conducteur 1530 ne regarde ni la première zone 1110 ou 1540 ni la deuxième zone 1210, alors aucune commande n'est transmise ni au premier élément électrique 1100 ou 1541 ni au deuxième élément électrique 1200. Plus généralement, préférentiellement, si le module d'analyse détecte que le conducteur ne regarde aucune des zones de la pluralité de zones 1110, 1540, 1210, aucune commande n'est transmise à un élément de la pluralité d'éléments 1100, 1200, 1541.

## Revendications

1. Procédé de commande mis en œuvre dans un véhicule automobile (1000), le véhicule (1000) comprenant :
- Dans son habitacle (1500), une interface homme-machine (1510), l'interface homme-machine (1510) comprenant :
- Un premier module à commandes (1513),
- Un module d'analyse d'un regard (1511),
- Une pluralité d'éléments électriques (1100, 1200, 1541) extérieurs à l'interface homme-machine (1510),
- Une pluralité de zones (1210, 1110, 1540) extérieures à l'interface homme-machine (1510),
- Chaque élément de la pluralité d'éléments électriques (1100, 1200, 1541) étant associé à une zone de la pluralité de zones (1210, 1110, 1540) du véhicule (1000),
**Caractérisé en ce qu'**il comprend les étapes suivantes :
- Premier déclenchement (S10) d'une première commande générique, par l'intermédiaire du premier module (1513), à un premier instant,
- Détection (S20), par le module d'analyse du regard (1511), à un deuxième instant, d'un regard (R) vers une première zone (1110, 1540) de la pluralité de zones associée à un premier élément électrique (1100, 1541) de la pluralité d'éléments électriques ou vers une deuxième zone (1210) de la pluralité de zones associée à un deuxième élément électrique (1200) de la pluralité d'élément électriques.
- Si le deuxième instant est séparé du premier instant d'une durée inférieure à un premier seuil prédéterminé, et :
- Si, à l'étape de détection, il a été détecté que le regard (R) portait vers la première zone (1110, 1540), transmission (S30) de la première commande au premier élément électrique (1100, 1541),
- Si, à l'étape de détection, il a été déterminé que le regard portait vers la deuxième zone (1210), transmission (S30) de la première commande au deuxième élément électrique (1200).

2. Procédé de commande selon la revendication précédente dans lequel le premier module (1513) est à commandes tactiles et le premier déclenchement (S20) est réalisé par un touché sur le premier module (1513).

3. Procédé de commande selon la revendication précédente dans lequel le premier module (1513) comprend un écran tactile et le premier déclenchement d'une première commande est réalisé par un touché sur l'écran tactile.

4. Procédé de commande selon l'une quelconque des revendications précédentes dans lequel la première zone (1540) est une cave à pieds (1540) comprise dans l'habitacle (1500), et dans lequel le premier élément électrique est une lampe d'éclairage (1541) de la cave à pieds (1540).

5. Procédé de commande selon l'une quelconque des revendications précédentes dans lequel la première zone (1110) est une surface extérieure du premier élément (1100) ou dans lequel la deuxième zone (1210) est une surface extérieure du deuxième élément (1200).

6. Procédé de commande selon la revendication précédente dans lequel le premier élément (1100) est un premier rétroviseur latéral (1100) du véhicule (1000), ou dans lequel le deuxième élément (1200) est un deuxième rétroviseur latéral (1200) du véhicule (1000).

7. Procédé de commande selon l'une quelconque des revendications précédentes dans lequel le procédé comporte en outre une étape de traduction de la commande préalablement à sa transmission :
- En une deuxième commande dédiée, si, à l'étape de détection, il a été détecté que le regards (R) portait vers la première zone (1110, 1540),
- En une troisième commande dédiée différente de la deuxième commande dédiée, si, à l'étape de détection, il a été déterminé que le regards (R) portait vers la deuxième zone (1210).

8. Procédé de commande selon l'une quelconque des revendications 1 à 5 dans lequel la transmission de la première commande au premier élément électrique (1110, 1540) ou de la deuxième commande au deuxième élément électrique (1210) est conditionnée à une coïncidence du premier instant avec le deuxième instant.

9. Programme d'ordinateur comprenant des instructions, exécutables par un microprocesseur ou un microcontrôleur, pour la mise en œuvre du procédé selon l'une quelconque des revendications précédentes.

10. Véhicule automobile (1000) **caractérisé en ce qu'**il est configuré pour réaliser les étapes du procédé de commande selon l'une quelconque des revendications 1 à 8.

## Patentansprüche

1. Steuerverfahren, das in einem Kraftfahrzeug (1000) implementiert ist, wobei das Fahrzeug (1000) umfasst:
- In ihrem Fahrgastraum (1500) befindet sich eine Mensch-Maschine-Schnittstelle (1510), die Mensch-Maschine-Schnittstelle (1510), umfassend:
- Ein erstes Modul mit Bedienelementen (1513),
- Ein Modul zur Analyse eines Blicks (1511),
- mehrere elektrische Elemente (1100, 1200, 1541) außerhalb der Mensch-Maschine-Schnittstelle (1510),
- eine Vielzahl von Zonen (1210, 1110, 1540) außerhalb der Mensch-Maschine-Schnittstelle (1510),
- Jedes Element der Mehrzahl von elektrischen Elementen (1100, 1200, 1541) ist einer Zone der Mehrzahl von Zonen (1210, 1110, 1540) des Fahrzeugs (1000) zugeordnet,
**Gekennzeichnet dadurch, dass** es die folgenden Schritte umfasst:
- Erster Trigger (S10) eines ersten generischen Befehls über das erste Modul (1513) zu einem ersten Zeitpunkt,
- Detektion (S20) durch das Blickanalysemodul (1511) in einem zweiten Moment eines Blicks (R) in Richtung einer ersten Zone (1110, 1540) der Mehrzahl von Zonen, die einem ersten elektrischen Element (1100, 1541) der Mehrzahl von elektrischen Elementen zugeordnet sind, oder in Richtung einer zweiten Zone (1210) der Mehrzahl von Zonen, die einem zweiten elektrischen Element (1200) der Mehrzahl von elektrischen Elementen zugeordnet sind.
- Wenn die zweite Zeit von der ersten Zeit durch eine Zeit getrennt ist, die kleiner als ein erster vorgegebener Schwellenwert ist, und:
- Wenn in der Detektionsphase festgestellt wurde, dass der Schacht (R) auf die erste Zone (1110, 1540) gerichtet war, so die Übertragung (S30) der ersten Steuerung auf das erste elektrische Element (1100, 1541),
- Wenn in der Detektionsphase festgestellt wurde, dass der Blick in Richtung der zweiten Zone (1210) gerichtet war, so erfolgte die Übertragung (S30) von der ersten Steuerung zum zweiten elektrischen Element (1200).

2. Steuerverfahren nach dem vorhergehenden Ansprüche, wobei das erste Modul (1513) mit Berührungssteuerungen versehen ist und die erste Freigabe (S20) durch eine Berührung des ersten Moduls (1513) erreicht wird.

3. Steuerungsverfahren nach dem vorhergehenden Ansprüche, wobei das erste Modul (1513) einen Touchscreen umfasst und das erste Auslösen eines ersten Befehls durch eine Berührung des Touchscreens erreicht wird.

4. Verfahren zum Ordnen nach einem der vorhergehenden Ansprüche, wobei die erste Zone (1540) ein Fußkeller (1540) ist, der in den Fahrgastraum (1500) eingeschlossen ist, und wobei das erste elektrische Element eine Beleuchtungslampe (1541) des Fußkellers (1540) ist.

5. Verfahren zur Steuerung nach einem der vorhergehenden Ansprüche, wobei die erste Zone (1110) eine äußere Oberfläche des ersten Elements (1100) ist oder wobei die zweite Zone (1210) eine äußere Oberfläche des zweiten Elements (1200) ist.

6. Verfahren zur Steuerung nach dem vorhergehenden Anspruch, wobei das erste Element (1100) ein erster Seitenspiegel (1100) des Fahrzeugs (1000) ist, oder wobei das zweite Element (1200) ein zweiter Seitenspiegel (1200) des Fahrzeugs (1000) ist.

7. Verfahren zum Ordnen nach einem der vorhergehenden Ansprüche, wobei das Verfahren ferner einen Schritt zum Übersetzen des Befehls vor seiner Übertragung umfasst:
- In einem zweiten speziellen Befehl, wenn in der Erkennungsphase festgestellt wurde, dass der Schacht (R) auf den ersten Bereich (1110, 1540) gerichtet war,
- In einem dritten dedizierten Befehl, der sich vom zweiten dedizierten Befehl unterscheidet, wenn beim Erkennungsschritt festgestellt wurde, dass sich der Schacht (R) in Richtung der zweiten Zone (1210) befand.

8. Regelungsverfahren nach einem der Ansprüche 1 bis 5, wobei die Übertragung der ersten Steuerung auf das erste elektrische Element (1110, 1540) oder der zweiten Steuerung auf das zweite elektrische Element (1210) auf ein Zusammentreffen des ersten Augenblicks mit dem zweiten Zeitpunkt bedingt ist.

9. Computerprogramm mit Anweisungen, die von einem Mikroprozessor oder Mikrocontroller ausführbar sind, zum Ausführen des Verfahrens nach einem der vorhergehenden Ansprüche.

10. Kraftfahrzeug (1000), **dadurch gekennzeichnet, dass** es so konfiguriert ist, dass es die Schritte des Bestellvorgangs gemäß einem der Ansprüche 1 bis 8 ausführt.

## Claims

1. A control method implemented in a motor vehicle (1000), the vehicle (1000) comprising:
- In its passenger compartment (1500), a man-machine interface (1510), the human-machine interface (1510) comprising:
- A first module with controls (1513),
- A module for analysing a gaze (1511),
- A plurality of electrical elements (1100, 1200, 1541) external to the human-machine interface (1510),
- A plurality of zones (1210, 1110, 1540) outside the human-machine interface (1510),
- Each element of the plurality of electrical elements (1100, 1200, 1541) being associated with a zone of the plurality of zones (1210, 1110, 1540) of the vehicle (1000),
**Characterized in that** it includes the following steps:
- First trigger (S10) of a first generic command, via the first module (1513), at a first instant,
- Detection (S20), by the gaze analysis module (1511), at a second instant, of a gaze (R) towards a first zone (1110, 1540) of the plurality of zones associated with a first electrical element (1100, 1541) of the plurality of electrical elements or towards a second zone (1210) of the plurality of zones associated with a second electrical element (1200) of the plurality of electrical elements.
- If the second time is separated from the first time by a time less than a first predetermined threshold, and:
- If, at the detection stage, it was detected that the manhole (R) was directed towards the first zone (1110, 1540), transmission (S30) of the first control to the first electrical element (1100, 1541),
- If, at the detection stage, it was determined that the view was towards the second zone (1210), transmission (S30) from the first control to the second electrical element (1200).

2. A control method according to the preceding claim wherein the first module (1513) is with touch controls and the first release (S20) is achieved by a touch on the first module (1513).

3. The control method of the preceding claim wherein the first module (1513) comprises a touch screen and the first trigger of a first command is achieved by a touch on the touch screen.

4. A method of ordering according to any one of the preceding claims wherein the first zone (1540) is a footed cellar (1540) included in the passenger compartment (1500), and wherein the first electrical element is a lighting lamp (1541) of the footed cellar (1540).

5. A method of control according to any one of the preceding claims, wherein the first zone (1110) is an outer surface of the first element (1100) or wherein the second zone (1210) is an outer surface of the second element (1200).

6. The method of control according to the preceding claim wherein the first element (1100) is a first side mirror (1100) of the vehicle (1000), or wherein the second element (1200) is a second side mirror (1200) of the vehicle (1000).

7. A method for ordering according to any one of the preceding claims, wherein the method further comprises a step for translating the order prior to its transmission:
- In a second dedicated command, if, at the detection stage, it was detected that the manhole (R) was directed towards the first area (1110, 1540),
- In a third dedicated command different from the second dedicated command, if, at the detection step, it was determined that the manhole (R) was towards the second zone (1210).

8. A control method according to any one of claims 1 to 5 wherein the transmission of the first control to the first electrical element (1110, 1540) or of the second control to the second electrical element (1210) is conditioned on a coincidence of the first instant with the second instant.

9. A computer program comprising instructions, executiable by a microprocessor or microcontroller, for carrying out the method according to any one of the preceding claims.

10. A motor vehicle (1000) **characterized in that** it is configured to carry out the steps of the ordering process according to any one of claims 1 to 8.
